# EUROPÄISCHE PATENTSCHRIFT

(11) **EP 2 443 726 B1**
(45) Veröffentlichungstag und Bekanntmachung des Hinweises auf die Patenterteilung: **14.06.2017**
(21) Anmeldenummer: 10715531.9
(22) Anmeldetag: 20.04.2010
(51) Int. Cl.: H02K 11/026, H02K 23/66

(54) **ELEKTRISCHE MASCHINE SOWIE VERSTELLANTRIEB**
ELECTRIC MACHINE AND ACTUATOR
MACHINE ÉLECTRIQUE ET ACTUATEUR

(30) Priorität: 18.06.2009 DE 102009027025
(43) Veröffentlichungstag der Anmeldung: 25.04.2012
(73) Patentinhaber: Robert Bosch GmbH, 70442 Stuttgart (DE)
(72) Erfinder: SIEHL, Sandra, 77855 Achern (DE); LUX, Thomas, 77815 Buehl-Weitenung (DE); LAUK, Detlef, 77871 Renchen (DE)
(86) Internationale Anmeldenummer: PCT/EP2010/055182
(87) Internationale Veröffentlichungsnummer: WO 2010/145867

(56) Entgegenhaltungen:
- EP-A1- 1 763 123
- WO-A1-2007/141249
- DE-A1- 10 129 884
- DE-B3-102005 052 722
- FR-A1- 2 841 060

## Beschreibung

### Stand der Technik

Die Erfindung betrifft eine elektrische Maschine gemäß dem Oberbegriff des Anspruchs 1 sowie einen Verstellantrieb für eine Kraftfahrzeuganwendung gemäß Anspruch 4. Aus der DE 103 18 734 A1 ist eine elektrische Maschine mit Entstörleiterplatte bekannt, wobei die Entstörleiterplatte mit standardisierten SMD-Bauteilen bestückt ist. Die bekannte elektrische Maschine hat sich bewährt. Es bestehen jedoch Bestrebungen zum einen die Entstörwirkung weiter zu optimieren und zum anderen den Bauraum für die elektrische Maschine zu minimieren.

Weiterer Stand der Technik ist EP 1 763 123 A1 und DE 10 2005 052 722 B3.

### Offenbarung der Erfindung

Der Erfindung liegt die Aufgabe zugrunde, eine bauraumoptimierte elektrische Maschine anzugeben. Bevorzugt soll die Entstörwirkung optimiert sein. Darüber hinaus ist es bevorzugt, wenn die Herstellungskosten minimiert sind. Ferner besteht die Aufgabe darin, einen Verstellantrieb für Kraftfahrzeuganwendungen mit einer wie beschrieben optimierten elektrischen Maschine anzugeben.

Diese Aufgabe wird hinsichtlich der elektrischen Maschine mit den Merkmalen des Anspruchs 1 und hinsichtlich des Verstellantriebs mit den Merkmalen des Anspruchs 4 gelöst. Vorteilhafte Weiterbildungen der Erfindung sind in den Unteransprüchen angegeben.

Der Erfindung liegt der Gedanke zugrunde, den Bauraum einer gattungsgemäßen elektrischen Maschine dadurch zu optimieren, dass die Entstörleiterplatte nicht wie bisher in einem erheblichen Abstand zu den Schleifkontakten (Kohlebürsten) angeordnet ist, sondern sich in unmittelbarer Nähe befindet. Der Abstand zu zwei Schleifkontakten beträgt weniger als 1 cm, bevorzugt weniger als 0,5 cm. In Weiterbildung der Erfindung wird unter dem Merkmal "in unmittelbarer Nähe zu dem ersten und/oder zweiten Schleifkontakt" ein Abstand verstanden, der es ermöglicht, wie später noch erläutert werden wird, die Entstörleiterplatte unmittelbar (ohne zusätzliche Verbindungsdrähte) mit einer den entsprechenden Schleifkontakt federkraftbeaufschlagenden Feder zu kontaktieren. Durch die Anordnung der Entstörleiterplatte in unmittelbarer Nähe zu mindestens einem der Schleifkontakte können lange Leitungsführungen zwischen Störquelle und Entstörleiterplatte minimiert werden, was wiederum zu einer optimierten Entstörungwirkung führt und damit die EMV (elektromagnetische Verträglichkeit) der elektrischen Maschine verbessert. Besonders bevorzugt ist eine Ausführungsform der elektrischen Maschine, bei der diese ausschließlich zwei Schleifkontakte, nämlich den ersten und den zweiten Schleifkontakt und keine weiteren Schleifkontakte aufweist. Bevorzugt ist ein fakultatives Gehäuse der elektrischen Maschine aus Metall ausgebildet, um die Schirmwirkung weiter zu optimieren. Darüber hinaus ist bevorzugt für eine gute Masseanbindung Sorge zu tragen. Der erste und der zweite Schleifkontakt bzw. deren sich in radialer Richtung erstreckende Mittelachsen, sind auf in Umfangsrichtung etwa 90° +- 20° voneinander beabstandeten Umfangswinkeln angeordnet, wobei die Entstörleiterplatte in einem Umfangswinkelbereich zwischen den die Umfangspositionen der Schleifkontakte definierenden Umfangswinkeln angeordnet ist. Die Entstörleiterplatte ist in einem gleichen Abstand zu dem ersten sowie zu dem zweiten Schleifkontakt angeordnet, um eine symmetrische Entstörwirkung zu garantieren und eine optische Bauraumminimierung zu erreichen. Dabei ist jedem Schleifkontakt eine den Schleifkontakt in radialer Richtung auf einen Kommutator eines Rotors federkraftbeaufschlagende Feder zugeordnet, über die derjeweilige Schleifkontakt die Entstörleiterplatte unmittelbar kontaktiert. Auf diese Weise können zusätzliche Verdrahtungen entfallen, was einen erheblichen Herstellungskostenvorteil mit sich bringt. Die Federn sind jeweils als Drahtfedern ausgebildet, vorzugsweise als Drahtbügelfedern, die den jeweiligen Schleifkontakt in radialer Richtung federkraftbeaufschlagen und gleichzeitig als elektrischer Leiter zur Kontaktierung der Entstörleiterplatte dienen.

Fertigungstechnisch ist es besonders bevorzugt, wenn die Federn lediglich, vorzugsweise mit einer Federkraft, auf jeweils einem Kontakt der Entstörplatte aufliegend angeordnet sind. Anders ausgedrückt wird auf eine Verlötung oder eine sonstige mechanische Fixierung an der Entstörleiterplatte verzichtet. Die elektrische Maschine ist vierpolig ausgeführt. Die Kombination von nur zwei Schleifkontakten mit einem vierpoligen Rotor ist durch eine geschickte Ankerwicklung realisierbar.

Bevorzugt ist die Entstörleiterplatte (insbesondere ausschließlich) mit SMD-Bauteilen bestückt. Diese Maßnahme ermöglicht es, die Entstörleiterplatte vor der Montage mit entsprechenden SMD-Bauteilen zu bestücken und anschließend nur noch mit den Bürstenfedern zu kontaktieren. Darüber hinaus eignen sich SMD-Bauteile optimal für eine voll automatisierbare Herstellung der Entstörleiterplatte. Besonders bevorzugt sind die SMD-Entstörbauteile (SMD-Bauteile) auf der Entstörleiterplatte als Kondensator und/oder als Diode und/oder als Varistor ausgebildet. Auch ist es denkbar, mindestens eine Spule als Entstörbauteil vorzusehen, wobei jedoch bevorzugt auf Induktivitäten auf der Entstörplatte und/oder außerhalb der Entstörplatte verzichtet wird.

In Weiterbildung der Erfindung ist die elektrische Maschine als Komponente eines Verstellantriebs in einem Kraftfahrzeug ausgebildet, vorzugsweise für einen elektrischen Fensterheberantrieb, für einen Schiebedachverstellantrieb oder einen Sitzverstellantrieb.

Darüber hinaus führt die Erfindung auch auf einen Verstellantrieb für mindestens eine Kraftfahrzeuganwendung, wobei der Elektromotor des Verstellantriebs als wie zuvor beschrieben ausgebildete elektrische Maschine realisiert ist, die sich durch eine Bauraumoptimierung und bevorzugt auch durch eine verbesserte EMV (elektromagnetische Verträglichkeit) auszeichnet.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1: schematisch ein Schaltbild, mit dem eine mögliche Anordnung einer Entstörleiterplatte in einem Stromkreis einer elektrischen Maschine verdeutlicht wird,
- Fig. 2: ein erstes Ausführungsbeispiel einer elektrischen Maschine ohne zusätzliche Entstördrosseln und
- Fig. 3: ein alternatives Ausführungsbeispiel einer elektrischen Maschine mit Entstördrosseln.

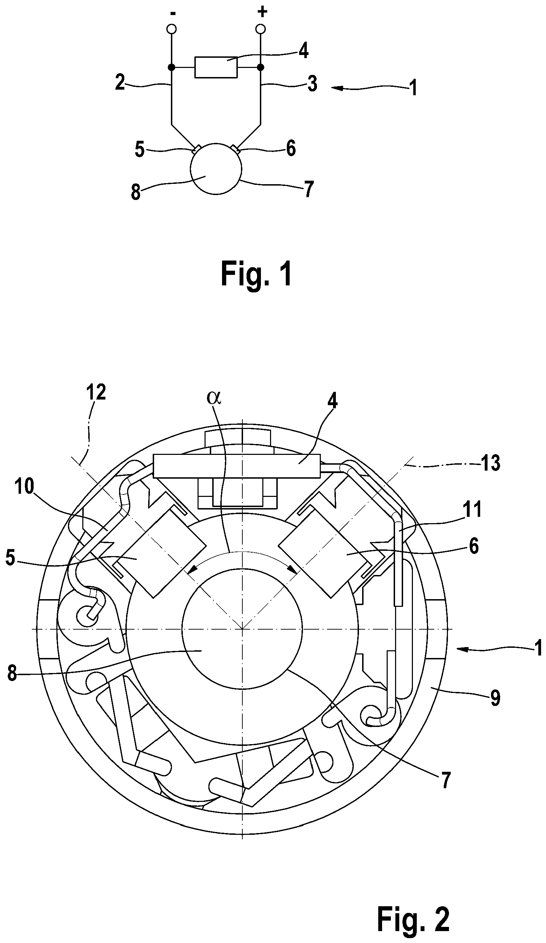

In Fig. 1 ist schematisch ein Schaltkreis gezeigt, der die Verschaltung einer elektrischen Maschine 1 zeigt. Zu erkennen ist ein Pluspol und ein Minuspol einer Kraftfahrzeugbatterie, die über zwei elektrische Leitungen 2, 3 die elektrische Maschine 1 kontaktiert. Eine Entstörleiterplatte 4 ist parallel zwischen die Leitungen 2, 3 geschaltet, die jeweils an ihrem Ende mit einem Schleifkontakt 5, 6 verbunden sind. Die Schleifkontakte 5, 6 wirken mit einem Kommutator 7 eines Rotors 8 in an sich bekannter Weise zusammen. Bemerkenswert ist, dass die beiden Schleifkontakte 5, 6 in etwa rechtwinklig zueinander angeordnet sind und die elektrische Maschine 1 bevorzugt vierpolig ausgebildet ist.

Fig. 2 zeigt ein erstes Ausführungsbeispiel einer elektrischen Maschine 1. Zu erkennen ist ein als Kunststoff-Spritzgussteil ausgebildeter Bürstenhalter 9, der einen ersten und einen zweiten Schleifkontakt 5, 6 (Kohlebürsten) trägt.

Jedem Schleifkontakt 5, 6 ist eine als Drahtbügelfeder ausgebildete Feder 10, 11 zugeordnet, wobei die Federn 10, 11 am Bürstenhalter 9 fixiert sind.

Die Federn 10, 11 beaufschlagen den zugehörigen Schleifkontakt 5, 6 in radialer Richtung nach innen auf einen Kommutator 7 des Rotors 8.

Wie sich aus Fig. 2 ergibt, sind eine Längsmittelachse 12 des ersten Schleifkontaktes 5 und eine Längsmittelachse 13 des zweiten Schleifkontaktes 6 in Umfangsrichtung um 90° versetzt zueinander angeordnet, befinden sich also auf um 90° zueinander versetzten Umfangspositionen.

Innerhalb eines von den Längsachsen 12, 13 begrenzten Winkelbereichs α befindet sich eine Entstörleiterplatte 4, die ausschließlich mit SMD-Bauteilen bestückt ist und die formschlüssig am Bürstenhalter 9 gehalten ist.

Bemerkenswert ist, dass beide Schleifkontakte 5, 6 gleich weit von der Entstörleiterplatte 4 beabstandet sind und sich in unmittelbarer Nähe zu der Entstörleiterplatte 4 befinden, derart, dass die Entstörleiterplatte 4 unmittelbar über die Federn 10, 11 elektrisch mit den beiden einzigen Schleifkontakten 5, 6 verbunden ist. Auf eine zusätzliche Verdrahtung wurde bewusst verzichtet.

Bei dem Ausführungsbeispiel gemäß Fig. 2 sind zusätzlich zu der Entstörleiterplatte 4 keine weiteren Entstörmittel, insbesondere keine Entstördrosseln vorgesehen.

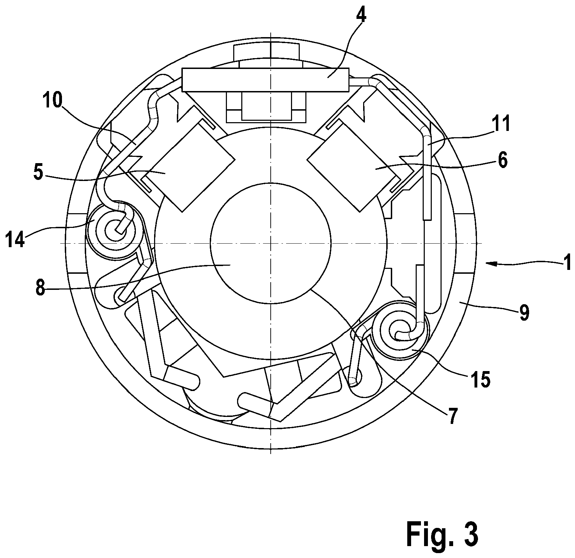

Fig. 3 zeigt ein alternatives Ausführungsbeispiel einer elektrischen Maschine. Diese umfasst, wie das Ausführungsbeispiel gemäß Fig. 2, einen Bürstenhalter 9, an dem zwei als Drahtbügelfedern ausgebildete Federn 10, 11 fixiert sind, derart, dass sie jeweils einen Schleifkontakt 5, 6 (Kohlebürste) in radialer Richtung nach innen auf einen Kommutator 7 eines Rotors 8 federkraftbeaufschlagen. Die Federn 10, 11 verbinden die Schleifkontakte 5, 6 unmittelbar elektrisch mit der Entstörleiterplatte 4. Dabei liegen die Federn 10, 11 lediglich seitlich auf Kontakten der Entstörleiterplatte 4 auf.

Im Gegensatz zu dem Ausführungsbeispiel gemäß Fig. 2 sind bei dem Ausführungsbeispiel gemäß Fig. 2 auf den von der Entstörleiterplatte 4 in Umfangsrichtung abgewandten Seiten der Schleifkontakte 5, 6 zusätzlich Entstördrosseln 14, 15 vorgesehen.

Bei den elektrischen Maschinen 1 gemäß den Fig. 2 und 3 ist gemeinsam, dass es sich um vierpolige Ausführungsformen handelt, die beide ausschließlich zwei um etwa 90° in Umfangsrichtung zueinander versetzt angeordnete Schleifkontakte 5, 6 aufweisen, welche unmittelbar über jeweils eine Feder 10, 11 elektrisch mit der Entstörleiterplatte 4 kontaktiert sind.

## Patentansprüche

1. Elektrische Maschine, umfassend eine Entstörleiterplatte (4), einen ersten Schleifkontakt (5) und mindestens einen zweiten Schleifkontakt (6), wobei ein erster Abstand zwischen der Entstörleiterplatte (4) und dem ersten Schleifkontakt (5) und ein zweiter Abstand zwischen der Entstörleiterplatte (4) und dem Schleifkontakt (5) gleich ist, wobei jedem Schleifkontakt (5, 6) eine den Schleifkontakt
(5) in radialer Richtung federkraftbeaufschlagte Feder (10) zugeordnet ist, über die der jeweilige Schleifkontakt (5, 6) mit der Entstörleiterplatte (4) unmittelbar elektrisch kontaktiert ist, und wobei die Federn (10, 11) als Drahtfedern,
insbesondere Drahtbügelfedern ausgebildet sind,
**dadurch gekennzeichnet dass**,
der erste und der zweite Schleifkontakt (5, 6) auf in Umfangsrichtung etwa 90° +/- 20° voneinander beabstandeten Umfangswinkeln angeordnet sind, dass die Entstörleiterplatte (4) in einem Umfangswinkelbereich zwischen den die Umfangsposition der Schleifkontakte (5, 6) definierenden Umfangswinkel angeordnet
ist, dass die Federn (10,11) verlötungsfrei auf jeweils einem Kontakt der Entstörleiterplatte (4) aufliegend angeordnet sind, dass ein Rotor (8) der elektrischen
Maschine (1) vierpolig ist, und dass der Abstand der Entstörleiterplatte (4) zu den beiden Schleifkontakten (5,6) weniger als 1 cm, besonders bevorzugt weniger als 0,5 cm, beträgt.

2. Elektrische Maschine nach Anspruch 1,
**dadurch gekennzeichnet,**
**dass** auf der Leiterplatte ausschließlich SMD-Bauteile, vorzugsweise mindestens ein Kondensator und/oder mindestens eine Diode und/oder mindestens ein Varistor und/oder mindestens eine Spule, angeordnet sind.

3. Elektrische Maschine nach Anspruch 1 oder 2,
**dadurch gekennzeichnet,**
**dass** die elektrische Maschine (1) als Bestandteil für einen Verstellantrieb in einem
Kraftfahrzeug, vorzugsweise für elektrische Fensterheber, elektrische Schiebedächer oder Sitzversteller ausgebildet ist.

4. Verstellantrieb für eine Kraftfahrzeuganwendung mit einer als Elektromotor ausgebildeten elektrischen Maschine (1) nach einem der vorhergehenden Ansprüche.

## Claims

1. Electrical machine, comprising an interference-suppression printed circuit board (4), a first sliding contact (5) and at least one second sliding contact (6), wherein a first distance between the interference-suppression printed circuit board (4) and the first sliding contact (5) and a second distance between the interference-suppression printed circuit board (4) and the sliding contact (5) are identical, wherein a spring (10) which applies a spring force to the sliding contact (5) in the radial direction is associated with each sliding contact (5, 6), direct electrical contact being made with the respective sliding contact (5, 6) by the interference-suppression printed circuit board (4) by means of the said spring, and wherein the springs (10, 11) are in the form of wire springs, in particular wire bow springs, **characterized in that** the first and the second sliding contact (5, 6) are arranged at circumferential angles which are spaced apart from one another in the circumferential direction through approximately 90° +/-20°, **in that** the interference-suppression printed circuit board (4) is arranged in a circumferential angle region between the circumferential angles which define the circumferential position of the sliding contacts (5, 6), **in that** the springs (10, 11) are arranged such that they lie on in each case one contact of the interference-suppression printed circuit board (4) without soldering, **in that** a rotor (8) of the electrical machine (1) has four poles, and **in that** the distance of the interference-suppression printed circuit board (4) from the two sliding contacts (5, 6) is less than 1 cm, particularly preferably less than 0.5 cm.

2. Electrical machine according to Claim 1, **characterized in that** only SMD components, preferably at least one capacitor and/or at least one diode and/or at least one varistor and/or at least one coil, are arranged on the printed circuit board.

3. Electrical machine according to Claim 1 or 2, **characterized in that** the electrical machine (1) is designed as an constituent part for an adjusting drive in a motor vehicle, preferably for electric window lifters, electrical sliding roofs or seat adjusters.

4. Adjusting drive for a motor-vehicle application, comprising an electrical machine (1) according to one of the preceding claims which is in the form of an electric motor.

## Revendications

1. Machine électrique, comprenant un circuit imprimé d'antiparasitage (4), un premier contact glissant (5) et au moins un deuxième contact glissant (6), un premier écart entre le circuit imprimé d'antiparasitage (4) et le premier contact glissant (5) et un deuxième écart entre le circuit imprimé d'antiparasitage (4) et le contact glissant (5) étant identiques, un ressort (10) qui soumet le contact glissant (5) à une force de ressort dans le sens radial étant associé à chaque contact glissant (5, 6), par le biais duquel le contact glissant (5, 6) correspondant est directement mis en contact électrique avec le circuit imprimé d'antiparasitage (4), et les ressorts (10, 11) étant réalisés sous la forme de ressorts à boudin, notamment de ressorts en étrier à boudin,
**caractérisée en ce que**
le premier et le deuxième contact glissant (5, 6) sont disposés sur des angles périphériques espacés d'environ 90° +/- 20° les uns des autres dans le sens périphérique, **en ce que** le circuit imprimé d'antiparasitage (4) est disposé dans une zone angulaire périphérique entre les angles périphériques qui définissent la position périphérique des contacts glissants (5, 6), **en ce que** les ressorts (10, 11) sont disposés en reposant sans soudage respectivement sur un contact du circuit imprimé d'antiparasitage (4), **en ce qu'**un rotor (8) de la machine électrique (1) est quadripolaire, et **en ce que** l'écart entre le circuit imprimé d'antiparasitage (4) et les deux contacts glissants (5, 6) est inférieur à 1 cm, notamment de préférence inférieur à 0,5 cm.

2. Machine électrique selon la revendication 1, **caractérisée en ce que** sur le circuit imprimé sont disposés exclusivement des composants CMS, de préférence au moins un condensateur et/ou au moins une diode et/ou au moins une varistance et/ou au moins une bobine.

3. Machine électrique selon la revendication 1 ou 2, **caractérisée en ce que** la machine électrique (1) est réalisée sous la forme d'un élément constitutif d'un mécanisme de positionnement dans un véhicule automobile, de préférence pour un lève-vitre électrique, un toit ouvrant électrique ou un dispositif de réglage de siège.

4. Mécanisme de positionnement pour une application dans un véhicule automobile, comprenant une machine électrique (1) selon l'une des revendications précédentes réalisée sous la forme d'un moteur électrique.
